(19) Europäisches Patentamt
European Patent Office
Office européen des brevets

(11) **EP 3 325 688 B1**

(12) **EUROPEAN PATENT SPECIFICATION**

(45) Date of publication and mention
of the grant of the patent:
**24.02.2021   Bulletin 2021/08**

(51) Int Cl.:
*C23C 18/16* (2006.01)       *C23C 18/36* (2006.01)
*C23C 18/54* (2006.01)       *G11B 5/858* (2006.01)

(21) Application number: **16828269.7**

(22) Date of filing: **14.07.2016**

(86) International application number:
**PCT/US2016/042271**

(87) International publication number:
**WO 2017/015054 (26.01.2017 Gazette 2017/04)**

(54) **ELECTROLESS NICKEL-PHOSPHOROUS PLATING METHOD USING BATHS WITH REDUCED ION CONCENTRATION**

STROMLOSES NICKEL-PHOSPHOR-PLATTIERUNGSVERFAHREN UNTER VERWENDUNG VON BÄDERN MIT REDUZIERTER IONENKONZENTRATION

PROCÉDÉ DE PLACAGE DE NICKEL-PHOSPHORE AUTOCATALYTIQUE UTILISANT DES BAINS À CONCENTRATION D'IONS RÉDUITE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:   **17.07.2015   US 201562193728 P**

(43) Date of publication of application:
**30.05.2018   Bulletin 2018/22**

(73) Proprietor: **Coventya Inc.**
**Brooklyn Heights, OH 44131 (US)**

(72) Inventors:
• **RUFFINI, Alan J**
**Brooklyn Heights, Ohio 44131 (US)**
• **WOJCIK, Matthew J**
**Brooklyn Heights, Ohio 44131 (US)**
• **LAPLANTE, Jean**
**Brooklyn Heights, Ohio 44131 (US)**
• **MISTY, Nilesh**
**Brooklyn Heights, Ohio 44131 (US)**

(74) Representative: **Maiwald Patent- und Rechtsanwaltsgesellschaft mbH**
**Elisenhof**
**Elisenstraße 3**
**80335 München (DE)**

(56) References cited:
EP-A1- 2 177 646          WO-A1-2014/123535
WO-A1-2016/083195       GB-A- 1 423 623
US-A- 4 511 614             US-B1- 6 524 642

• **ENGELHAUPT ET AL.: 'Electrodeposition of Low Stress Nickel Phosphorous Alloys for Precision Component Fabrication' 01 January 2001, XP055347197**

**Description**

**TECHNICAL FIELD**

This application relates to methods for forming electroless nickel-phosphorous coatings on work pieces, such as alkaline zincate coated rigid data storage disks, using the baths.

**BACKGROUND**

Electroless Nickel (EN) plating baths or plating solution, designed to provide high phosphorous deposits, are used to produce non-magnetic sublayers for rigid memory disks. The deposit should provide a uniform, hard and polishable plated surface to protect an aluminum substrate. Since the deposit serves as a base layer for a sputtered media film, it is desirable that it is free of asperities and microdefects, such as pits and nodules. Furthermore, there is a demand to increase the storage density of a data storage disk, which requires the EN deposit to be more corrosion resistant against corrosive polishing slurries and subsequent acid washing.

The reaction to deposit nickel and phosphorous is autocatalytic and requires the reduction of both nickel and phosphorous and the oxidation of hypophosphite (hypo). The formation of by-products, specifically orthophosphite (ortho), during the plating process prevents the EN plating bath from being used for prolonged periods of time because higher concentrations of ortho are responsible for the deterioration of deposit properties, specifically corrosion resistance and deposit stress. In fact, there have been attempts to control orthophosphite formation from aging EN plating solutions using precipitation methods. In practice the useful life of an EN plating process is described in terms of Metal Turnovers (MTO's), where one MTO is equivalent to the replenishment of the initial nickel concentration. In a typical EN plating bath containing 6.0 g/l Ni, for each MTO achieved, approximately 30 grams per liter of orthophosphite are generated, or for each gram of nickel deposited 5 grams of orthophosphite are formed. Consequently, the EN plating solution becomes highly concentrated with orthophosphite anions. This can become a problem if free nickel ions are available as they can combine with the ortho anion to form an insoluble precipitate as shown below.

$$Ni^{++} + 2H_2PO_3^- \rightarrow Ni(H_2PO_3)_{2ppt}$$

For the above precipitation (ppt) reaction to occur the concentrations of both Ni and ortho must be high enough to satisfy the solubility product constant (Ksp):

$$Ksp = [Ni^{++}] \times [H_2PO_3^-]^2$$

Furthermore at a given concentration of free Ni and ortho, the precipitation of $Ni(H_2PO_3)_2$ is greatly affected by the pH of the bath and the chelation system. The chelation system is generally optimized to control the free Ni concentration to prevent the precipitation of $Ni(H_2PO_3)_2$ as well as to complex any extraneous metal ions introduced from the external environment, such as Zn, Fe and Al. However, even with the most efficient chelation system, precipitation can occur as the ortho concentration and pH of the working bath increase. For example, at an ortho concentration of 100 grams per liter, the onset of precipitation can occur at a pH around 5.0 at optimum chelation. Optimum chelation can be the amount of chelation required to complex 100% of the Ni ion.

In order to prepare an aluminum memory disk for EN plating, the pretreatment cycle requires the application of a dilute alloy zincate, which affords an immersion deposit of Zn and Fe and provides a barrier coating to prevent the aluminum substrate from oxidation. The process insures adequate adhesion of the EN film to the substrate. This is a well accepted practice for pretreating aluminum for hard disk applications and, in general, for plating electroless nickel on aluminum. The zincate solution is typically highly alkaline, with a pH greater than 14.

The highly alkaline zincate solution provides a zincate plated surface on the aluminum disk that has a high localized pH. Interaction of the EN plating bath with the highly alkaline zincate plated surface of the disk can result in *in situ* formation of colloids and submicron particles at the interface or diffusion zone of the bath and zincate surface. These colloids and submicron particles can potentially be adsorbed on the plating surface and disrupt uniform EN film growth. This can result in defects, such as micropits and nodules on the plated surface as well as increased deposit porosity of the EN plated film, which can decrease corrosion resistance of the EN plated film.

Additionally, during the plating operation, disks are arranged on plating mandrels that are closely spaced with average spacing between 6-10mm. The number of disks per load varies, but can range from 0.5-0.9 sq. ft. per gallon of operating EN plating bath. This close spacing and high loading not only restricts diffusion of reactants to and from the plating surface, but can also restrict the movement of EN plating solution. As a result, *in situ* particles generated at the interface between the substrate and EN plating solution are restricted from moving away from the plating surface, increasing the tendency of the particles/colloids to adsorb and negatively affect the plating film growth. While various additives, such as surfactants, can be used to improve this dynamic effect by helping to prevent the adsorption of particulates, the use of these additives can also have a deleterious impact on the plated film.

Once EN plating starts, orthophosphite anion is generated, and, as the plating progresses, this anion concentration increases. Typical orthophosphite levels obtained for hard disk platers can range from 30 grams per liter up to 100 grams per liter.

Data storage EN plating bath solutions can be controlled by a steady state "bleed and feed" mechanism to keep the concentration of ortho and other by-products at a constant level. This helps to keep the both the deposit properties and plating rate predictable as they change with the accumulation of by-products. This, however, does not resolve the issue of nickel orthophosphite insolubility and furthermore does not preclude the adsorption of in situ generated particles on the plating surface. Moreover, reduction of the bleed and feed orthophosphite or by-product set point of the bath can increase the cost of operation of the bath.

Defects from increasing orthophosphite concentration in the presence of free nickel ion include higher intrinsic stress in the plated EN film and an increase in deposit porosity, which can lead to poor corrosion resistance of the EN film in strongly acidic media. This is a condition that is highly unfavorable for advanced media production and further exaggerated by increasing pH, which is used to improve the speed of deposition.

US 6,524,642 B1 discloses a process for the electroless metal-plating of a substrate in a plating bath containing an aging composition comprising by-products generated in the course of a plating cycle. EP 2 177 646 A1 discloses a substrate having a bondable metallic coating comprising on a A1 or Cu surface, a Ni-P layer, which layers have specific thicknesses and reduced stress. GB 1 423 623 A discloses electric irons or ironing machines, especially improvements in the coating of soles of irons made of aluminum or aluminum alloys having nickel coating deposited thereon by chemical displacement. WO 2014/123535 A1 discloses methods for metallizing an aluminum paste wherein the aluminum paste is contacted with an electroless nickel deposit solution to coat the aluminum paste with a nickel-phosphorus layer.

## SUMMARY

The present invention is directed to method of forming an electroless nickel-phosphorous coating on an alkaline zincate coated substrate, the method comprising: providing the alkaline zincate coated substrate; contacting surfaces of the zincate coated substrate with an aqueous electroless nickel-phosphorous plating bath, the bath consisting essentially of water, 2.0 g/L to 4 g/l Ni; 25 g/l to 40 g/l hypophosphorous reducing agent; 0 to 120 g/l orthophosphite by-product; less than 25 g/l of a combination of organic acid complexing agents selected from the group consisting of malic acid, lactic acid, and succinic acid, 0.0004 to 0.0007 g/l stabilizer, and at least one pH adjuster in an amount effective to provide the bath with a pH between 4.4 and 4.8, wherein the electroless nickel-phosphorous bath with an orthophosphite concentration of up to 120 g/l provides an electroless nickel-phosphorous deposit on the zincate coated substrate with an intrinsic stress that is more compressive than electroless nickel-phosphorous deposit provided using similar electroless-nickel-phosphorous baths containing greater than 5 g/l Ni.

## BRIEF DESCRIPTION OF DRAWINGS

Fig. 1 illustrates a graph showing maximum pH tolerance at 190°F for 70%, 90%, and 100% chelation of standard EN baths and reduced ion EN baths described herein.

Fig. 2 illustrates a graph showing pH of a reduced ion bath at which precipitate occurs with NaOH addition in the absence of chelation.

Fig. 3 illustrates a graph showing deposit weight loss/corrosion rate after exposure to 50% v/v nitric acid for 25 minutes with electroless nickel-phosphorous deposits formed using standard EN baths and reduced ion EN baths described herein.

Fig. 4 illustrates intrinsic stress profiles of electroless nickel-phosphorous deposits formed using standard EN baths and reduced ion EN baths described herein.

Fig. 5 illustrates a graph showing effect of increased pH on intrinsic stress profiles of electroless nickel-phosphorous deposits formed using standard EN baths and reduced ion EN baths described herein.

Fig. 6 illustrates a graph showing boiling stability of standard EN baths and reduced ion EN baths described herein.

Fig. 7 illustrates a graph showing specific gravity of standard EN baths and reduced ion EN baths described herein.

Fig. 8 illustrates a plot showing the Ra of electroless nickel-phosphorous deposits formed using standard EN baths and reduced ion EN baths described herein.

Fig. 9 illustrates a plot showing the Rp of electroless nickel-phosphorous deposits formed using standard EN baths and reduced ion EN baths described herein.

DETAILED DESCRIPTION

In the specification and the claims, which follow, reference will be made to a number of terms, which shall be defined to have the following meanings.

The singular forms "a", "an" and "the" include plural referents unless the context clearly dictates otherwise.

"Optional" or "optionally" means that the subsequently described event or circumstance may or may not occur, and that the description includes instances where the event occurs and instances where it does not.

Approximating language, as used herein throughout the specification and claims, may be applied to modify any quantitative representation that could permissibly vary without resulting in a change in the basic function to which it is related. Accordingly, a value modified by a term or terms, such as "about", is not to be limited to the precise value specified. In some instances, the approximating language may correspond to the precision of an instrument for measuring the value.

Embodiments described herein relate to an improved electroless nickel-phosphorous plating bath with a reduced ion concentration that deposits an alloy of nickel-phosphorous (NiP) with improved corrosion resistance in acidic media and improved deposit stress. Advantageously, the electroless nickel-phosphorous plating bath with reduced ion concentration can provide a uniform electroless nickel-phosphorous deposit on highly alkaline zincate coated substrates without the use of additives, which can produce plating defects.

The electroless nickel-phosphorous plating bath with a reduced ion concentration operates at a reduced specific gravity, providing the additional benefit of prevention of the co-deposition of inert particles into the deposit that can cause plating defects. The electroless nickel-phosphorous plating bath can better tolerate the by-product formation of orthophosphite while improving the critical deposit properties, such as smoother surface morphology and reduction of microdefects, during electroless nickel plating of alkaline zincate coated substrates, which are used for high storage density applications.

The electroless nickel-phosphorous plating bath formulations described herein can have a reduced ionic strength and, specifically, a reduced concentration of Ni ions compared to standard electroless nickel baths. According to the invention, the electroless nickel-phosphorous plating bath has a reduction in the concentration of Ni ions to levels ranging from about 2.0 g/l to about 4.0 g/l Ni, and, specifically, about 3 g/l Ni. The concentration of Ni in the bath relative to the concentration of orthophosphite is such that $Ni(H_2PO_3)_2$ precipitation is inhibited during plating of the alkaline zincate coated substrate at orthophosphite by-product concentrations up to 120 g/l and bath pH of about 4.4 to about 4.8. Providing the Ni ions at reduced levels allows the electroless nickel-phosphorous plating bath to employ significantly less complexing agents compared to standard baths having Ni concentrations greater than 5.0 g/l (*e.g.,* about 6 g/l or more) and operate with an orthophosphite concentration of up to about 120 g/l to provide an electroless nickel-phosphorous deposit on the alkaline zincate coated substrate with an intrinsic stress that is more compressive than electroless nickel-phosphorous deposit provided using standard baths having Ni concentrations greater than 5.0 g/l. This allows the electroless nickel-phosphorous bath to be effectively used for a higher MTO set point as defined by the orthophosphite concentration, which can provide substantial cost savings for waste treatment. Moreover, electroless nickel-phosphorous deposit formed from electroless nickel baths that include 1.0 g/l to less than about 5.0 g/l Ni, for example, about 2.0 g/l to about 4.0 g/l Ni, or about 3 g/l Ni, showed improved corrosion resistance in acidic media and have a smoother surface morphology and reduction of microdefects compared electroless nickel-phosphorous deposits formed using standard baths having Ni concentrations greater than 5.0 g/l.

The nickel can be provided in the bath in the form of a water soluble nickel salt. The water-soluble nickel salts can include those, which are soluble in the plating bath and which can yield an aqueous solution of a predetermined concentration. The nickel salt can be selected from the group consisting of nickel sulfate, nickel chloride, nickel bromide, nickel iodide, nickel acetate, nickel malate, a nickel hypophosphite and combinations thereof. The water-soluble nickel salts may be used alone or as a mixture.

The hypophosphorous reducing agent used in the bath can include any of a variety of hypophosphorous reducing agents used in known types of the electroless nickel plating baths. In some embodiments, the hypophosphorous reducing agent is selected from the group consisting of sodium hypophosphite, potassium hypophosphite, ammonium hypophosphite, and combinations thereof.

The concentration of the hypophosphorous reducing agent in the electroless nickel plating can differ with the respective types of hypophosphorous reducing agent and can be adjusted to vary the concentration of the phosphorous in the electroless nickel-phosphorous coating that is formed using the bath. According to the invention the concentration of the hypophosphorous reducing agent in the electroless nickel-phosphorous plating bath is about 25 g/L to about 40 g/L, for example, about 30 g/l to about 35 g/l. In other embodiments, the concentration of the hypophosphorous reducing agent in the electroless nickel-phosphorous plating bath can be about 30 g/L.

According to the invention a complexing agent or a mixture of complexing agents is included in the electroless nickel-phosphorous plating bath. Complexing agents as used herein can also include chelating agents. The complexing agents and/or chelating agents generally retard the precipitation of nickel ions from the plating solution as insoluble salts, such as phosphites, by forming a more stable nickel complex with the nickel ions and provide for a moderate rate of the reaction of nickel precipitation.

The complexing agents and/or chelating agents can be included in the plating bath in amounts sufficient to complex the nickel ions present in the bath and to further solubilize the hypophosphite degradation products formed during the plating process. Advantageously, the amount of complexing agent is substantially less than the amount of complexing agent employed in the similar electroless nickel-phosphorous baths containing greater than 5.0 g/l nickel ions.

A variety of complexing agents, used in known electroless nickel plating solutions, may be used. Specific examples of the complexing agents may include monocarboxylic acids, such as glycolic acid, lactic acid, gluconic acid or propionic acid, dicarboxylic acids, such as malic acid, malonic acid, succinic acid, tartaric acid, oxalic acid or adipic acid, aminocarboxylic acids, such as glycine or alanine, ethylene diamine derivatives, such as ethylenediamine tetraacetate, versenol (N-hydroxyethyl ethylenediamine-N,N',N'-triacetic acid) or quadrol (N,N,N', N'-tetrahydroxyethyl ethylene diamine), phosphnic acids, such as 1-hydroxyethane-1,1-diphosphonic acid, ethylene diamine tetramethylene phosphonic acid and water-soluble salts thereof.

Some complexing agents, such as acetic acid or succinic, for example, may also act as a pH buffering agent, and the appropriate concentration of such additive components can be optimized for any plating bath after consideration of their dual functionality.

According to the invention, at least one pH buffer, complexing agent, or chelating agent is selected from the group consisting of an acetic acid, formic acid, succinic acid, malonic acid, an ammonium salt, lactic acid, malic acid, citric acid, glycine, alanine, glycolic acid, lysine, aspartic acid, ethylene diamine tetraacetic acid (EDTA), and combinations thereof. According to the invention, mixtures of 2 or more of the above pH buffers, complexing agents, and/or chelating agents are used in the electroless nickel plating bath described herein. According to the invention, the electroless nickel-phosphorous plating bath includes less than about 25 g/l of a combination of organic acid complexing agents selected from the group consisting of malic acid, lactic acid, and succinic acid.

The plating bath also contains additives with various kinds of purposes so long as the properties of the plating bath are not deteriorated. The bath includes a stabilizer, such as lead acetate, at a concentration of about 0.0004 g/l to about 0.0007 g/l. Other stabilizers can also be used besides or in addition to lead acetate including those metal cations that act as catalytic poisons, such as Pb, Bi, Sn, In, salts or compounds thereof and combinations thereof.

According to the invention the electroless nickel-phosphorous plating bath can be free of or substantially free of surfactants, which can have a negative effect on the corrosion resistance and surface morphology of the electroless nickel-phosphorous deposit. Surfactants including organic compounds from the class of fatty acids and water soluble salts thereof, amino compounds, and sulfates and sulfonates of fatty acids and fatty alcohols are typically employed in electroless nickel plating baths to modify the inherent properties of the plating bath itself or the quality of the nickel deposit. These additives, however, can potentially form colloids with other components of the bath, such as free Ni, Zn, Fe, and Al, ions, that can produce plating defects. According to the invention the plating bath described herein is free of or substantially free of such additives to minimize defects, such as mircropitting and particle deposition, in the electroless nickel-phosphorous deposit.

The aqueous electroless nickel-phosphorous plating baths is operated or maintained at a pH of about 4.4 to about 4.8 during electroless nickel-phosphorous plating of an alkaline zincate coated substrate. With this range of pH, the reducing reaction by the hypophosphorous reducing agent is allowed to occur efficiently to prevent decomposition of the hypophosphorous reducing agent as well as to prevent precipitation of nickel orthophosphite and the plating bath from decomposing. Moreover, with this range of pH, it is possible to prevent the plating bath from being lowered in stability as a result of the excessively high reducing potential of the reducing agent.

At least one pH adjustment agent is used to adjust the pH to the above range. When the pH of the bath is too high, it can be adjusted by adding, for example, an acid. When the pH of the bath is too low, it can be adjusted by adding, for example, ammonium hydroxide.

The stability of the operating pH of the plating bath can be controlled by the addition of various buffer compounds such as acetic acid, propionic acid, boric acid, or the like, in amounts up to about 30 g/l with amounts of from about 2 g/l to about 30 g/l being typical. As noted above, some of the buffering compounds such as acetic acid and succinic acid may also function as complexing agents.

In accordance with the methods described herein, a substrate can be plated with the electroless nickel-phosphorous plating bath to provide an electroless nickel-phosphorous deposit or coating on the substrate. In some embodiments, the substrate can be an aluminum substrate on which a zincate coating has been deposited using a highly alkaline zincate plating process. In some embodiments, the aluminum substrate can be an aluminum or aluminum alloy disc used for data storage applications, such as an aluminum hard disk for use in hard drive media. The alkaline zincate plating process can employ an alkaline zinc bath or solution having a high pH (*e.g.,* greater than pH 14).

The alkaline zincate coated aluminum substrate is plated using the electroless nickel-phosphorous plating bath by contacting the substrate with or immersing the substrate in the plating bath for a duration time effective to form an electroless nickel-phosphorous coating or deposit on the zincate coated surface of the substrate. The zincate coated surface on the aluminum disk has a high localized pH than can potentially induce *in situ* formation of colloids and submicron particles at the interface or diffusion zone of the bath and zincate surface. Such colloids and submicron particles can disrupt uniform electroless nickel-phosphorous film growth and corrosion resistance of the nick-phosphorous film. Advantageously, the reduced ion concentration of the electroless nickel-phosporous plating bath is such that the bath has a reduced specific gravity and during plating of the alkaline zincate coated substrate $Ni(H_2PO_3)_2$ precipitation is inhibited, thereby preventing co-deposition of inert particles into the electroless nickel-phosphorous deposit, enhancing uniform electroless nickel-phosphorous film growth, reducing microdefects in the electroless nickel-phosphorous film, and improving corrosion resistance of the electroless nickel-phosphorous film.

In some embodiment, the substrate can be cleaned or pre-processed prior to plating. During plating, the bath can be maintained at a bath temperature about 175°F to about 200°F, *e.g.,* about 188°F to about 194°F. The duration of contact of the electroless nickel-phosphorous plating bath with the substrate being plated will determine the thickness of the electroless nickel-phosphorous coating. Typically, a contact time can range from as little as about one minute to several hours or even several days, for example, about 60 to about 120 minutes.

During the deposition of the electroless nickel-phosphorous deposit or coating, mild to severe agitation can be employed. The mild agitation can be, for example, a mild air agitation, mechanical agitation, bath circulation by pumping, rotation of a barrel for barrel plating, rotation of mandrel for disk plating, etc. The electroless nickel-phosphorous plating bath also may be subjected to a periodic or continuous filtration treatment to reduce the level of contaminants therein. Replenishment of the constituents of the bath may also be performed, in some embodiments, on a periodic or continuous basis to maintain the concentration of constituents, and in particular, the concentration of nickel ions and hypophosphite ions, as well as the pH level within the desired limits.

According to the invention, the electroless nickel-phosphorous plating bath is operated at orthophosphite concentrations of up to about 120 g/l and/or up to 4 MTOs (based on ortho generation per turnover) without a substantial reduction in the electroless nickel-phosphorous deposit properties or in plating bath efficiency. In some embodiments, the MTO of the plating bath can be between 2.0 and 4.5. Maintaining the MTO within these levels allows for an economic plating performance and consistently reproducible plating results.

The electroless nickel-phosphorous coated substrate so formed can be removed from the electroless nickel plating bath and rinsed, for example, with deionized water.

The electroless nickel coating formed on a surface of the substrate using the electroless nickel-phosphorous plating bath can have of relatively uniform thickness and be substantially free of asperites and micro defects, such a pits and nodules. The electroless nickel-phosphorous coating can also have an enhanced corrosion resistance and an intrinsic stress that is more compressive than electroless nickel-phosphorous coating provided using standard baths having Ni concentrations greater than 5.0 g/l.

In one embodiment, the electroless nickel-phosphorous coating can have an average thickness in a range from about 1 micron to about 250 microns. In another embodiment, the electroless nickel-phosphorous coating can have an average thickness in a range from about 1 micron to about 100 microns. The electroless nickel coating can be a high phosphorous coating having a phosphorous content of about 10 to about 13% phosphorous. Actual thickness of an as plated disk can be about 250 to about 600 micro inches.

The following example illustrates the electroless nickel-phosphorous plating solutions of the invention. Unless otherwise indicated in the following examples, in the written description and in the claims, all parts and percentages are by weight, temperatures are in degrees centigrade and pressure is at or near atmospheric pressure.

Example 1

Reduced electroless nickel-phosphorous plating bath and a standard electroless nickel-phosphorous plating bath were prepared with the following formulations. The baths were operated under similar conditions noted below.

Table 1

|  | Reduced Ion Grams/Liter | Standard Bath Grams/Liter |
|---|---|---|
| Nickel Metal | 3 (2-4) | 6(5-7) |
| Malic Acid | 10 | 20 |
| Lactic Acid | 9 | 18 |
| Succinic acid | 4.5 | 4.5 |
| Ammonium Hydroxide | to adjust pH | to adjust pH |
| Sodium Hypophosphite | 30 (24-40) | 30 (24-40) |

(continued)

|  | Reduced Ion Grams/Liter | Standard Bath Grams/Liter |
|---|---|---|
| Lead Acetate | 0.00055 | 0.00055 |
| pH | 4.50 -4.55 | 4.50 -4.55 |
| Temp (F) | 188-194 | 188 - 194F |
| Deposition Rate microinches/min | 3.6 - 4.0 | 3.6 - 4.0 |

Advantageously, the reduced ion electroless nickel-phosphorous plating bath formulation allowed for a significant reduction in the amount of organic acids needed for complexing to nearly half as compared standard formulations used in the data storage plating industry.

The main advantage of reduced ion formulation is the impact it has on the solubility of Ni orthophosphite.

$$Ksp = [Ni^{++}] \times [H_2PO_3^-]^2$$

Since the Ni concentration operates at approximately half the standard concentration of most commercial processes there is a profoundly positive impact on the concentration range of orthophosphite that is tolerated in the system. This process allows for higher levels of by-product formation while improving the corrosion resistance and intrinsic stress of the deposit. It is postulated that the primary reason for the system improvement is the change to the solubility product constant. The micro precipitation of Ni orthophosphite does not take place until higher by-product concentrations are reached due the equilibrium shift realized by the lower nickel concentration and further by the fact that the formulation can better tolerate the adverse affect of the pH neutralization that occurs during the introduction of the zincated aluminum into the working bath.

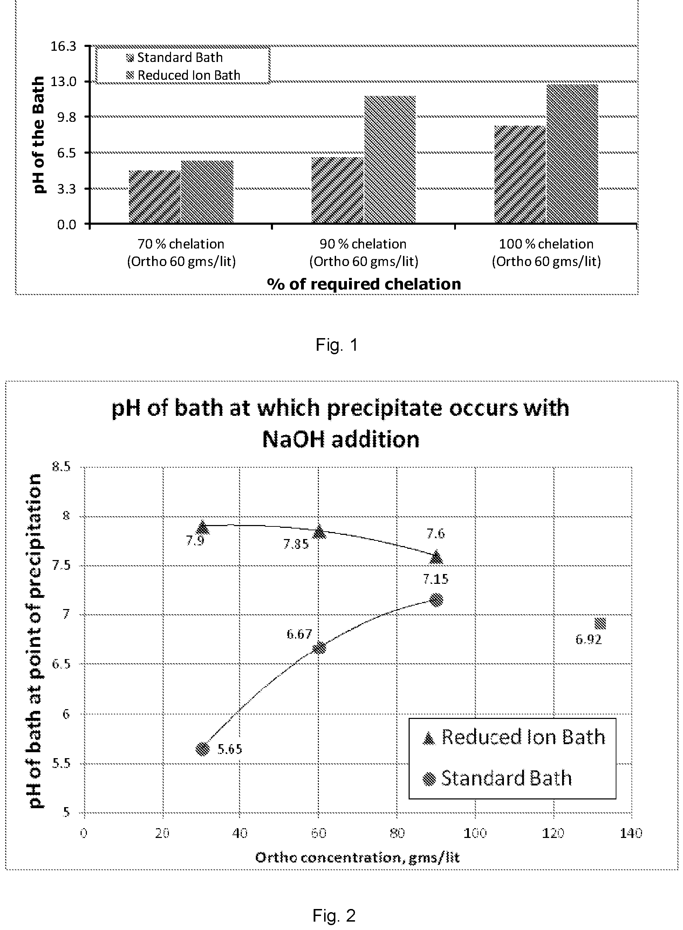

Fig. 1 illustrates the affect that chelation has on the impact of orthophosphite precipitation at 190°F. For example at 100% chelation, a titration of a working EN bath containing an orthophosphite concentration of 60 g/L with dilute sodium hydroxide reveals the Reduced Ion formulation can tolerate a pH of close to 13 while the standard formulation can only tolerate a pH of 9.2 before the onset of precipitation.

Fig. 2 further illustrates the tolerance of the Reduced Ion formulation to pH and precipitation and the impact the reduced nickel concentration alone (no chelation) has on the Nickel orthophosphite precipitation over a range of orthophosphite concentrations at room temperature.

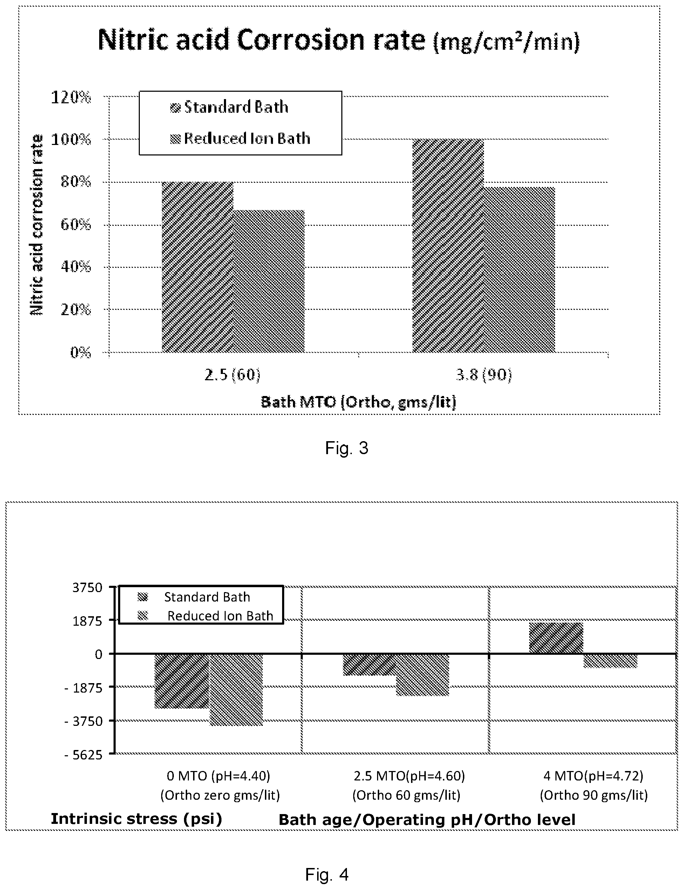

As a result of the Reduced Ion's formulation tolerance to Ni orthophosphite formation the deposit corrosion resistance and intrinsic stress are improved significantly. Fig. 3 illustrates the weight loss results after exposure to 50% Nitric acid corrosion exposure at 74°F for 25 minutes. The Reduced Ion deposit, produced from a solution with a pH of 4.54 and 60 gpl orthophosphite afforded a 17% improvement in corrosion rate as compared to the standard process. This was reproducible at higher orthophosphite levels (90gpl) at pH 4.68. It is important to note that the plating rate for both processes was controlled at 3.8-4.3 microinches per minute.

It is well-known that as an electroless Nickel solution ages and by-products, particularly orthophosphite, increase in concentration, the intrinsic stress of the EN film will also increase. Furthermore it is generally accepted that a lower intrinsic stress of an EN deposit will improve the fatigue life of the substrate and improve the overall adhesion of the plated film to the substrate. Stresses in the EN film that are tensile are unfavorable and will reduce the fatigue life of the substrate and result in deposits with inferior corrosion resistance. A given formulation with zero to low orthophosphite levels will have an intrinsic stress that is compressive, however as the orthophosphite concentration increases through the normal plating process, the intrinsic stress will become tensile. This fact is also further exaggerated by higher pH values.

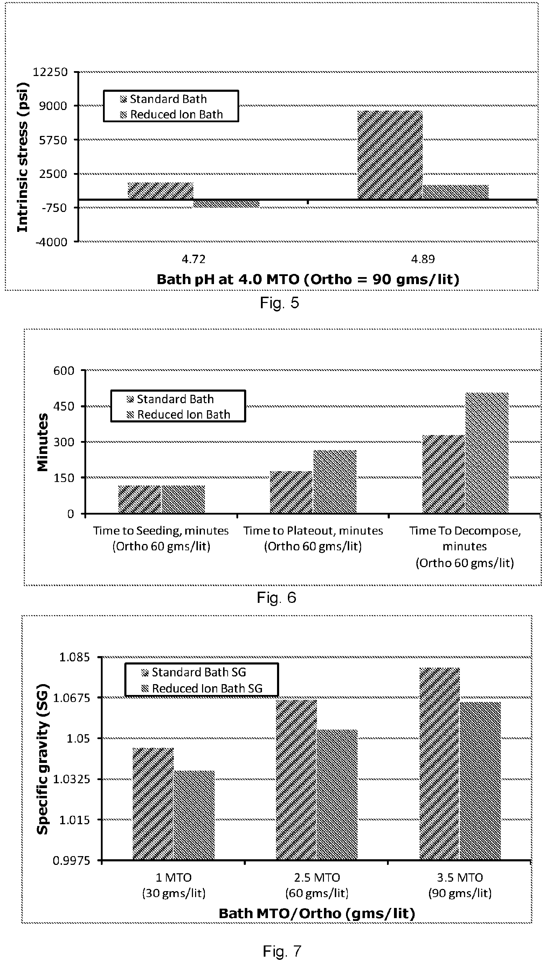

Fig. 4 shows the impact that bath age (ortho level), pH, and formulation have on the resulting deposit stress. In all cases the Reduced Ion EN deposit afforded a compressive stress, even under the most severe plating condition of pH / ortho respectively 4.72 / 90 gpl. Increasing the pH to even higher levels at a 90 gpl ortho concentration has even a greater impact on intrinsic stress. Fig. 5 illustrates the improvement at a pH at 4.89.

An unexpected finding was an improvement in the bath stability during operation. Electroless nickel solutions are stabilized with certain additives such as Pb, Bi, and other inhibitors that act as catalytic poisons(such as Sn and In) They are very effective at very low concentrations and generally diffuse non linearly onto or near the plating surface. Concentration ranges from 0.2 ppm up to 2.0 ppm are typical. Even at this range of concentration the deposit performance can be impacted negatively and is a function of the plating process solution dynamics. In the data storage industry, it is favorable to improve the bath stability without the use of additional catalytic poisons, since other key performance factors like micro pitting and surface edge profiles/uniformity are impacted by higher stabilizer levels.

Fig. 6 shows the performance of the reduced ion chemistry against the standard formulation in a boiling stability evaluation. The boiling stability is a standard laboratory test and generally accepted for use to evaluate and predict the ability of an EN formulation to maintain stability under severe plating conditions. Although the time to seed out (nucleation of Nickel particles) was comparable for both the Reduced Ion chemistry (RI) and Standard chemistry the time to complete plate out was greatly improved. It is important to note that once seed out occurs the nucleation sites are present for further decomposition and the tolerance for the RI formulation to decompose is far greater than the standard chemistry. Additionally the improvement in bath stability can improve the overall surface smoothness of the EN deposit under more severe operating conditions such as higher temperatures above 194°F.

Another unexpected finding with the development of the Reduced Ion chemistry is the advantage of operating the chemistry with a reduced specific gravity. Fig. 7 illustrates the reduction in specific gravity of the reduced ion chemistry at three orthophosphite levels (30/60/90 g/L) correlating to bath ages of 1.0/2.5/3.8 MTO. Being able to operate at a low specific gravity may have an impact on particle adsorption and the subsequent encapsulation of particles during the plating operation. The particles may be generated in situ in the electroless nickel plating bath or can be introduced from the external environment. During the plating process the substrates are fixed on a rack system designed to continuously move in the plating bath, mainly to keep the solution velocity fast, keeping the diffusion zone free of any particles as disk spacing on the racks is very close making it difficult for those particles to escape before adsorption. During the plating process the disks are mechanically abrading the plastic racks (usually PVDF, PEEK, PP and PTFE) which introduce small plastic particles into the plating bath. It seems logical to add surfactants to the chemical formulation to prevent the adsorption of these particles, however the surfactant introduction itself can have a negative impact on other critical film properties such as corrosion resistance and micro pitting. As the requirement to increase areal density for data storage continues to increase the need for a defect free, EN plated and polished substrate, eliminating defects with sizes of less than 1 micron has been a primary focus of disk manufacturers. These small particles, even after filtration of the solution thru 0.1 micron filters, are present in sufficient quantity in the plating bath causing defects in processing for media. These small particles follow Brownian motion within the fluid boundary layer and in the diffusion zone near the plating surface. It seems logical that particles will be hindered from escaping due to the tight spacing between disks on the rack and will also influenced by the specify gravity of the solution.

The settling velocity of a particle is given as follows:

$$\text{Settling Velocity} = \frac{(\text{diameter of particle})^2 \text{ x (particle density - liquid density)}}{\text{viscosity of the liquid}}$$

Therefore to improve the settling velocity of a particle one can:

- increase the diameter of the particle
- reduce the viscosity of the plating bath or
- reduce the specify density between the particle and the plating bath.

The advantage of the reduced ion chemistry is further illustrated in the Table 2 below. The cost to operate and Electroless Nickel bath decreases as you operate at higher MTO's (higher ortho concentrations) so it is desirable to the disk manufacturer to plate at an MTO (ortho concentration) as high as possible without negatively impacting key deposit properties. As the orthophosphite levels required to keep the same specific gravity will vary between the standard chemistry and the reduced ion chemistry. As can be seen in the Table for a given MTO for the standard bath, the corresponding MTO for the Reduced Ion bath to maintain the same specific gravity of the plating solution is significantly higher, giving the disk manufacturer an opportunity to better control costs while improving the quality of the plated EN film.

Table 2 - Bath specific gravity differences

| Operating Ortho levels to maintain equivalent specific gravity | | | |
|---|---|---|---|
| Standard Bath MTO | Reduced Ion Bath MTO | Ortho with Standard bath (gms/lit) | Ortho with Reduced Ion bath (gms/lit) |
| 0 | 0.66 | 0 | 26 |
| 0.5 | 1.25 | 20 | 50 |
| 1 | 1.84 | 30 | 55 |
| 2 | 3.02 | 50 | 75 |

(continued)

| Operating Ortho levels to maintain equivalent specific gravity | | | |
|---|---|---|---|
| Standard Bath MTO | Reduced Ion Bath MTO | Ortho with Standard bath (gms/lit) | Ortho with Reduced Ion bath (gms/lit) |
| 2.5 | 3.61 | 60 | 87 |
| 3 | 4.20 | 70 | 98 |
| 3.5 | 4.79 | 80 | 109 |
| 3.8 | 5.14 | 90 | 122 |

Disks produced using the reduced ion formulations have better surface morphology after corrosion testing in acid media than standard formulations. For example, disk substrates (95mm / alloy 5586D) were plated side by side under identical pH and temperature conditions in the respective formulations to 400 micro inches of NiP thickness.

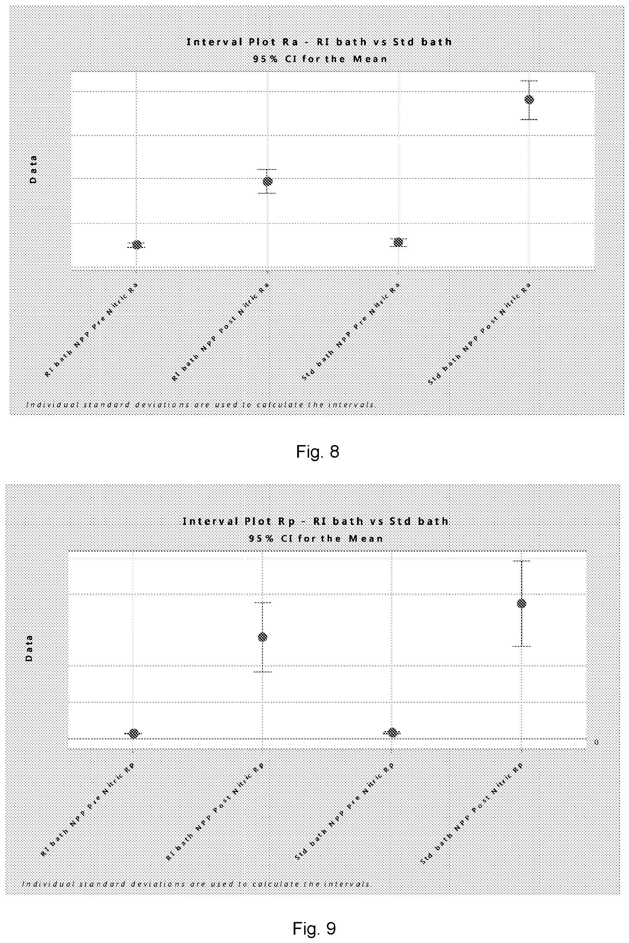

The disks were polished using a Struers Tegramin -30 single sided polisher removing 40 micro inches, then subjected to a Nitric acid solution at 74 degrees for 60 minutes. The disk were measured (using a MicroXam 100 profilometer) before and after corrosion testing for Ra and Rp, indicating the degree of surface roughness and the degree of nodular height respectively. The results shown in Figs. 8 and 9 indicate that the polished surface analysis is statistically the same for both the reduced ion and standard chemistries, however after exposure to nitric acid the deposited NiP film from the reduced ion formulation showed a significant improvement in both Ra and Rp, indicating smoother surface morphology after exposure to strong acid. This test correlates well with the reduction of plated micro defects after polishing and after exposure to acid wash solutions associated with advanced data storage applications.

## Claims

1. A method of forming an electroless nickel-phosphorous coating on an alkaline zincate coated substrate, the method comprising:

   providing the alkaline zincate coated substrate;
   contacting surfaces of the zincate coated substrate with an aqueous electroless nickel-phosphorous plating bath, the bath consisting essentially of water, 2.0 g/L to 4 g/l Ni; 25 g/l to 40 g/l hypophosphorous reducing agent; 0 to 120 g/l orthophosphite by-product; less than 25 g/l of a combination of organic acid complexing agents selected from the group consisting of malic acid, lactic acid, and succinic acid, 0.0004 to 0.0007 g/l stabilizer, and at least one pH adjuster in an amount effective to provide the bath with a pH between 4.4 and 4.8, wherein the electroless nickel-phosphorous bath with an orthophosphite concentration of up to 120 g/l provides an electroless nickel-phosphorous deposit on the zincate coated substrate with an intrinsic stress that is more compressive than electroless nickel-phosphorous deposit provided using similar electroless-nickel-phosphorous baths containing greater than 5 g/l Ni.

2. The method of claim 1, wherein the concentration of Ni in the bath relative to the concentration of orthophosphite is such that $Ni(H_2PO_3)_2$ precipitation is inhibited during plating of the zincate coated substrate at orthophosphite concentrations up to 120 g/l at a bath pH of 4.4 to about 4.8.

3. The method of claim 1, the bath is operated up to 4 metal turnovers.

4. The method of claim 1, the bath is operated up to orthophosphite levels of 120 g/l.

5. The method of claim 1, the bath being free of a surfactant.

6. The method of claim 1, wherein the zincate coated substrate is an aluminum disk for data storage.

## Patentansprüche

1. Verfahren zur Bildung einer stromlosen Nickel-Phosphor-Beschichtung auf einem mit alkalischem Zinkat beschichteten Substrat, wobei das Verfahren umfasst:

Bereitstellen des alkalisch zinkatbeschichteten Substrats;
Kontaktieren der Oberflächen des mit Zinkat beschichteten Substrats mit einem wässrigen stromlosen Nickel-Phosphor-Plattierungsbad, wobei das Bad im Wesentlichen aus Wasser, 2,0 g/L bis 4 g/l Ni; 25 g/l bis 40 g/l Hypophosphor-Reduktionsmittel; 0 bis 120 g/l Orthophosphit-Nebenprodukt; weniger als 25 g/l einer Kombination von Komplexbildnern aus organischen Säuren, ausgewählt aus der Gruppe bestehend aus Äpfelsäure, Milchsäure und Bernsteinsäure, 0,0004 bis 0.0007 g/l Stabilisator und mindestens ein pH-Einstellmittel in einer wirksamen Menge, um das Bad mit einem pH-Wert zwischen 4,4 und 4,8 zu versehen, besteht, wobei das stromlose Nickel-Phosphor-Bad mit einer Orthophosphit-Konzentration von bis zu 120 g/l eine stromlose Nickel-Phosphor-Abscheidung auf dem zinkatbeschichteten Substrat mit einer Eigenspannung bereitstellt, die stärker komprimierend ist als eine stromlose Nickel-Phosphor-Abscheidung, die unter Verwendung ähnlicher stromloser Nickel-Phosphor-Bäder mit mehr als 5 g/l Ni bereitgestellt wird.

2. Verfahren nach Anspruch 1, wobei die Konzentration von Ni in dem Bad im Verhältnis zur Konzentration von Orthophosphit so ist, dass die Ni(H$_2$PO$_3$)$_2$-Ausfällung während des Plattierens des zinkatbeschichteten Substrats bei Orthophosphit-Konzentrationen bis zu 120 g/l bei einem Bad-pH-Wert von 4,4 bis etwa 4,8 inhibiert wird.

3. Verfahren nach Anspruch 1, wobei das Bad bis zu 4 Metallumsätzen betrieben wird.

4. Verfahren nach Anspruch 1, wobei das Bad bis zu Orthophosphitwerten von 120 g/l betrieben wird.

5. Verfahren nach Anspruch 1, wobei das Bad frei von einem Tensid ist.

6. Verfahren nach Anspruch 1, wobei das zinkatbeschichtete Substrat eine Aluminiumplatte zur Datenspeicherung ist.


**Revendications**

1. Procédé de formation d'un revêtement de nickel-phosphore autocatalytique sur un substrat revêtu de zincate alcalin, le procédé comprenant :

l'obtention du substrat revêtu de zincate alcalin ;
la mise en contact de surfaces du substrat revêtu de zincate avec un bain de placage de nickel-phosphore autocatalytique aqueux, le bain consistant essentiellement en eau, 2,0 g/l à 4,0 g/l de Ni ; 25 g/l à 40 g/l d'agent réducteur hypophosphoreux ; 0 à 120 g/l de sous-produit orthophosphite ; moins de 25 g/l d'une combinaison d'agents complexants de type acide organique choisis dans le groupe constitué par l'acide malique, l'acide lactique, et l'acide succinique, 0,0004 à 0,0007 g/l de stabilisant, et au moins un agent d'ajustement du pH en une quantité efficace pour doter le bain d'un pH compris entre 4,4 et 4,8, dans lequel le bain de nickel-phosphoreux autocatalytique avec une concentration d'orthophosphite allant jusqu'à 120 g/l forme un dépôt de nickel-phosphore autocatalytique sur le substrat revêtu de zincate avec une contrainte intrinsèque qui est davantage compressive que celle du dépôt de nickel-phosphore autocatalytique obtenu par utilisation de bains de nickel-phosphore autocatalytiques similaires contenant plus de 5 g/l de Ni.

2. Procédé selon la revendication 1, dans lequel la concentration de Ni dans le bain par rapport à la concentration d'orthophosphite est telle que la précipitation de Ni(H$_2$PO$_3$)$_2$ soit inhibée durant le placage du substrat revêtu de zincate à des concentrations d'orthophosphite allant jusqu'à 120 g/l et à un pH de bain de 4,4 à environ 4,8.

3. Procédé selon la revendication 1, dans lequel le bain fonctionne jusqu'à 4 renouvellements de métal.

4. Procédé selon la revendication 1, dans lequel le bain fonctionne jusqu'à des niveaux d'orthophosphite de 120 g/l.

5. Procédé selon la revendication 1, dans lequel le bain est exempt de tensioactif.

6. Procédé selon la revendication 1, dans lequel le substrat revêtu de zincate est un disque d'aluminium pour le stockage de données.

Fig. 1

Fig. 2

## Nitric acid Corrosion rate (mg/cm²/min)

Fig. 3

Fig. 4

Fig. 5

Fig. 6

Fig. 7

Fig. 8

Fig. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6524642 B1
- EP 2177646 A1
- GB 1423623 A
- WO 2014123535 A1